(19) Europäisches Patentamt
European Patent Office
Office européen des brevets

(11) Veröffentlichungsnummer : **0 077 933**
**B1**

(12) **EUROPÄISCHE PATENTSCHRIFT**

(45) Veröffentlichungstag der Patentschrift : **22.01.86**

(51) Int. Cl.[4] : **G 01 N 27/90**

(21) Anmeldenummer : **82109118.8**

(22) Anmeldetag : **02.10.82**

(54) **Wirbelstromgeberanordnung.**

(30) Priorität : **27.10.81 DE 3142459**

(43) Veröffentlichungstag der Anmeldung : **04.05.83 Patentblatt 83/18**

(45) Bekanntmachung des Hinweises auf die Patenterteilung : **22.01.86 Patentblatt 86/04**

(84) Benannte Vertragsstaaten : **FR GB IT**

(56) Entgegenhaltungen :
**DE-B- 2 838 388**
**US-A- 2 878 447**
**US-A- 3 900 793**
**Firmenprospekt, Institut Dr. Förster, DEFECTOTEST.Geber-Systeme M 2.850/2.851/2.852 und H 2.859/2.860/2.861, 6/1977**

(73) Patentinhaber : **Institut Dr. Friedrich Förster Prüfgerätebau GmbH & Co. KG**
**Postfach 925 In Laisen 70**
**D-7410 Reutlingen 1 (DE)**

(72) Erfinder : **Reitz, Helmut**
**Sonnentalstrasse 31**
**D-7430 Metzingen (DE)**

**EP 0 077 933 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine Wirbelstromgeberanordnung zum Prüfen von langgestreckten elektrisch leitenden Prüflingen mit einer Prüfspulenanordnung, die vom Prüfling durchlaufen wird, mit einem Satz von zwei Führungsdüsen, die ebenfalls vom Prüfling durchlaufen werden und von denen eine vor und eine hinter der Prüfspulenanordnung angebracht ist, sowie mit Mitteln zur Halterung der Prüfspulenanordnung und der Führungsdüsen in der vom Prüfling durchlaufenen Bahn.

Derartige Geberanordnungen sind seit langem bekannt (siehe Firmenprospekt, Institut Dr. Forster, « DEFECTOTEST-Gebersysteme M2.850/2.851/2.852 », 6/1977) und in einer Vielfalt von Ausführungsformen am Markt erhältlich. Sie dienen zur Prüfung metallischer Erzeugnisse auf Fehler und zur Untersuchung solcher physikalischer Eigenschaften der Erzeugnisse, die mit der Ausbildung von Wirbelströmen im Zusammenhang stehen. Um eine möglichst gute Anpassung an unterschiedliche Prüfgutdimensionen zu gewährleisten, gehören zu einer Geberanordnung häufig eine große Zahl unterschiedlicher Prüfspulenanordnungen, die, meist mittels einer Steckverbindung, austauschbar ausgeführt sind. Ganz allgemein unterscheidet man bei den Geberanordnungen zwischen solchen, die nur für nicht ferromagnetische Werkstoffe und solchen, die auch für ferromagnetische Werkstoffe geeignet sind. Die letzteren besitzen zusätzlich eine Einrichtung zum Magnetisieren des Prüfgutes in den Sättigungsbereich, um so den Einfluß schwankender magnetischer Permeabilität weitgehend zu eliminieren. Den Führungsdüsen obliegen die beiden wichtigen Aufgaben, das Prüfgut möglichst genau durch die Mitte der Prüfspulenbohrung zu führen und die Prüfspulenanordnung gegen Beschädigung durch das Prüfgut zu schützen. Im Falle der Geberanordnung mit Magnetisierungseinrichtung übernehmen die Führungsdüsen die zusätzliche Aufgabe, den Magnetfluß im Bereich der Prüfspulenanordnung in das Prüfgut einzuleiten. In jedem der beiden Fälle ist pro austauschbare Prüfspulenanordnung auch ein austauschbarer Satz von Führungsdüsen vorgesehen. Während jedoch der Austausch der steckbaren Prüfspulenanordnungen fast immer in einer Richtung senkrecht zur Prüfgutbahn erfolgt, müssen die Führungsdüssen fast immer in Richtung der Prüfgutbahn ausgetauscht werden.

Die getrennte Bestückung der Geberanordnung mit Prüfspulenanordnungen und Führungsdüsen sowie das normalerweise benötigte große Sortiment verschiedener Abmessungen bringen es mit sich, daß es zuweilen zu Fehlbestückungen kommt, daß z. B. Führungsdüsen mit bezüglich der Prüfspulendimension zu großem Bohrungsdurchmesser eingesetzt werden. Das kann zu ernsten Störungen ja zur Zerstörung der Prüfspulenanordnung führen. Ein anderer Nachteil der bekannten Geberanordnungen ist es, daß das Umrüsten auf andere Prüfgutdurchmesser recht große Verlustzeiten bedingt, die insbesondere dann zu Buche schlagen, wenn die Geberanordnung in eine Fertigungslinie eingebaut ist. Dazu kommt, daß der derzeit geübte Bestückungsvorgang keine Ansätze zu einer Rationalisierung durch Automatisierung bietet.

Demgegenüber stellt sich die Erfindung zur Aufgabe, eine Wirbelstromgeberanordnung nach der eingangs gegebenen Definition zu schaffen, bei der die Möglichkeit einer falschen Zuordnung von Prüfspulenanordnungen und Führungsdüsen entfällt, die Umrüstzeiten für Dimensionswechsel wesentlich gesenkt werden und sich die Möglichkeit einer Automatisierung bietet.

Die Aufgabe wird gelöst durch eine Geberanordnung, die gemäß Patentanspruch 1 gekennzeichnet ist.

Die erfindungsgemäße Geberanordnung weist gegenüber der bekannten einige im folgenden beschriebene bedeutsame Vorteile auf. Die möglichen Kombinationen von Prüfspulenanordnungen und Führungsdüsen sind im Revolverkopf fest vorgegeben. Dadurch werden falsche Zuordnungen von vorneherein unmöglich. Herstellerseits lassen sich leicht beliebige Zusammenstellungen solcher Kombinationen für einen Revolverkopf realisieren. Die Zusammenstellungen können mithin auf die Bedürfnisse einer Fertigungslinie zugeschnitten sein. Die sorgsame Lagerung eines Sortiments von Prüfspulenanordnungen und Düsen entfällt, da die letzteren im Revolverkopf sauber und sicher aufbewahrt sind. Die Umrüstzeiten, soweit sie auf die Umstellung von Spulenanordnungen und Führungsdüsen auf andere Prüflingsabmessungen zurückgehen, werden recht klein. Sie können durch jetzt möglich gewordene Automatisierung des Umrüstvorganges weiter reduziert werden. Besonders vorteilhaft wirkt sich die Erfindung aus, wenn es sich bei der Geberanordnung um eine solche für einen ferromagnetischen Prüfling handelt, d. h. wenn zu ihr noch eine Einrichtung zum Magnetisieren des Prüflings gehört. In diesem Fall können nach einer Ausgestaltung der Erfindung die Kombinationen von Prüfspulenanordnung und Führungsdüsen jeweils durch Drehen des Revolverkopfes in den Magnetkreis der Magnetisierungseinrichtung eingeschoben werden, so z. B. zwischen zwei Pole aus magnetisch leitendem Material. Die beiden letzteren können konkav kreisförmig gekrümmt sein. Zum Einleiten des Magnetflusses in die Führungsdüsen können Anpassungsstücke vorgesehen sein, deren Rückseite in die Krümmung der Pole paßt. Bei einer Magnetisierungseinrichtung mit zwei die Bahn des Prüfgutes umfassenden Spulen kann der Revolverkopf zwischen diesen beiden Spulen angeordnet sein. In diesem Falle können die Führungsdüsen in die Spulen hineinragen. Das wird möglich, wenn die Spulen so montiert sind, daß sie in Prüflingslängsrichtung auseinander gefahren werden können. Zur Realisierung dieser Bewegung kann ein von einem Elektromotor getriebener Spindelantrieb benutzt werden. Die die Führungsdüsen aufnehmenden Bohrungen im Revolverkopf können zweckmäßigerweise einen einheitlichen Durchmesser aufweisen. Weitere Ausgestaltungen der Erfindung können den Patentansprüchen wie auch der folgenden Beschreibung entnommen werden, die die Erfindung an Hand einiger Figuren näher erläutern soll. Es zeigen im einzelnen :

Figur 1 Die Vorderansicht einer Wirbelstromgeberanordnung mit U-förmigem Magnetisierungsjoch

Figur 2 einen Horizontalschnitt durch die Anordnung nach Figur 1

Figur 3 die Vorderansicht einer anderen Wirbelstromgeberanordnung mit vom Prüfgut durchlaufenen Magnetisierungsspulen

Figur 4 einen vertikalen Längsschnitt durch die Anordnung nach Figur 3

Figur 5 eine Seitenansicht der Anordnung nach Figur 3

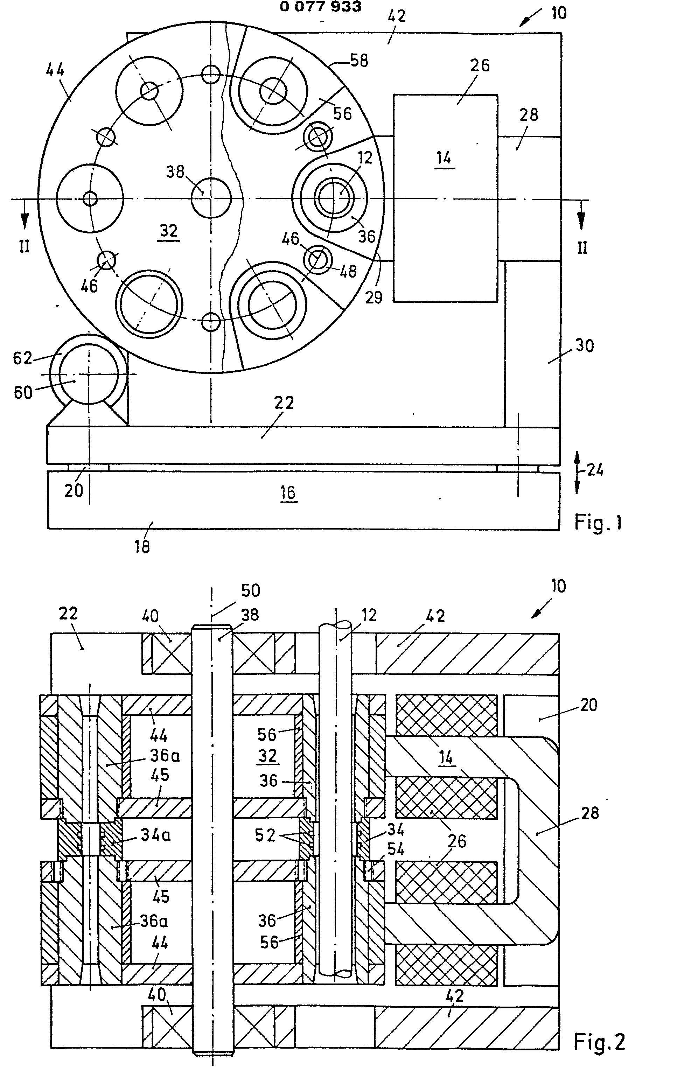

Als Anwendungsbeispiel der Erfindung ist in den Figuren 1 und 2 eine Wirbelstromgeberanordnung 10 zum Prüfen langestreckten Prüflings verschiedener Durchmesser, z. B. eines Drahtes 12, dargestellt. Im vorliegenden Falle gehört zur Geberanordnung 10 eine Magnetisierungseinrichtung 14, mit deren Hilfe der innerhalb der Prüfspule befindliche Bereich des Drahtes 12 bis in die magnetische Sättigung magnetisiert werden kann. Grundsätzlich ist die Anwendung der Erfindung jedoch auch dann möglich, wenn bei der Prüfung nichtferromagnetischer Werkstoffe die Magnetisierungseinrichtung entfällt. Die gesamte Geberanordnung 10 ist auf einen Hubtisch 16 aufgebaut, mit dessen Hilfe sie zur Anpassung an die verschiedenen Prüfgutdurchmesser auf beliebige Höhen eingestellt werden kann. Der Hubtisch ist von bekannter Bauart. Er besitzt ein Unterteil 18, Hubsäulen 20 sowie eine Montageplatte 22 und läßt sich gemäß Pfeil 24 auf- und abbewegen. Die Magnetisierungseinrichtung 14 besteht aus zwei Magnetisierungsspulen 26, einem Jochkern 28 in U-Form aus ferromagnetischem Material und einem Montagebock 30, mit dessen Hilfe die Magnetisierungseinrichtung 14 an der Montageplatte 22 befestigt ist. Der Jochkern 28 weist Pole 29 auf, die konkav kreisförmig gekrümmt sind.

Das Kernstück der Geberanordnung 10 bildet ein Revolverkopf 32, der sechs verschiedene Kombinationen von Prüfspulenanordnungen 34 und dazu passenden Führungsdüsen 36, im folgenden kurz Spulen/Düsen-Kombination genannt, enthält. Der Revolverkopf 32 ist über eine Welle 38 und Lager 40 in zwei Lagerplatten 42 gelagert, die an der Montageplatte 22 angebracht sind und von denen die vordere in Figur 1 weggelassen wurde, um den Blick auf die dahinterliegenden Bauteile freizugeben. Als tragende Bauteile des Revolverkopfes 32 dienen je zwei Scheiben 44 und 45 aus nichtferromagnetischem Material, von denen in Figur 1 wiederum die vordere des Einblicks wegen teilweise weggebrochen wurde. Die Scheiben 44 und 45 werden von Schrauben 46 zusammengehalten, während ihr Abstand durch Hülsen 48 bestimmt wird. Die Mittelpunkte aller Prüfspulenanordnungen 34 und der zugehörigen Führungsdüsen 36 liegen auf einer Kreisbahn um die Drehachse 50 des Revolverkopfes 32. Die Außendurchmesser der Führungsdüsen 36 und Prüfspulenanordnungen 34 sind gleich, die Innendurchmesser je nach dem vorgesehenen Prüfprogramm gestaffelt. Die Prüfspulenanordnungen 34, die in bekannter Weise mit Differenzwicklungen 52 oder Mehrfachdifferenzwicklungen ausgestattet sein können, sind zwischen den inneren Scheiben 45 angebracht und mittels eines Ringes 54, der innen und außen mit einem Gewinde versehen ist, befestigt. Die Führungsdüsen 36 sind eingeschraubt in die Bohrung einer der Scheiben 44 bzw. des Ringes 54. Zur Einleitung des Magnetflusses aus den Polen 29 in die Führungsdüsen 36 sind Anpassungsstücke 56 vorgesehen, in deren Bohrung die Führungsdüsen 36 sitzen und deren Rücken 58 eine auf die Krümmung der Pole 29 passende Krümmung aufweisen. Dadurch wird erreicht, daß der Rücken 58 des Anpassungsstückes 56, das zur derzeit in Prüfstellung befindlichen Spulen/Düsen-Kombination gehört, exakt am Pol 29 anliegen kann. So ergibt sich eine optimale Magnetisierung für den innerhalb der Prüfspule 34 liegenden Bereich des Prüflings 12.

Durch Verdrehen des Revolverkopfes 32 in Schritten von jeweils 60° kan jede der sechs vorgegebenen Spulen/Düsen-Kombinationen in die Prüfstellung gebracht werden, so auch z. B. die in Figur 2 im Schnitt gezeigte Kombination von Prüfspulenanordnung 34a und Führungsdüsen 36a. Das Einstellen des Revolverkopfes 32 kann von Hand oder über einen Stellmotor 60 bewerkstelligt werden, der z. B. mit einem Zahnrad 62 einen Zahnkranz an der Peripherie eine der Scheiben 44 antreibt.

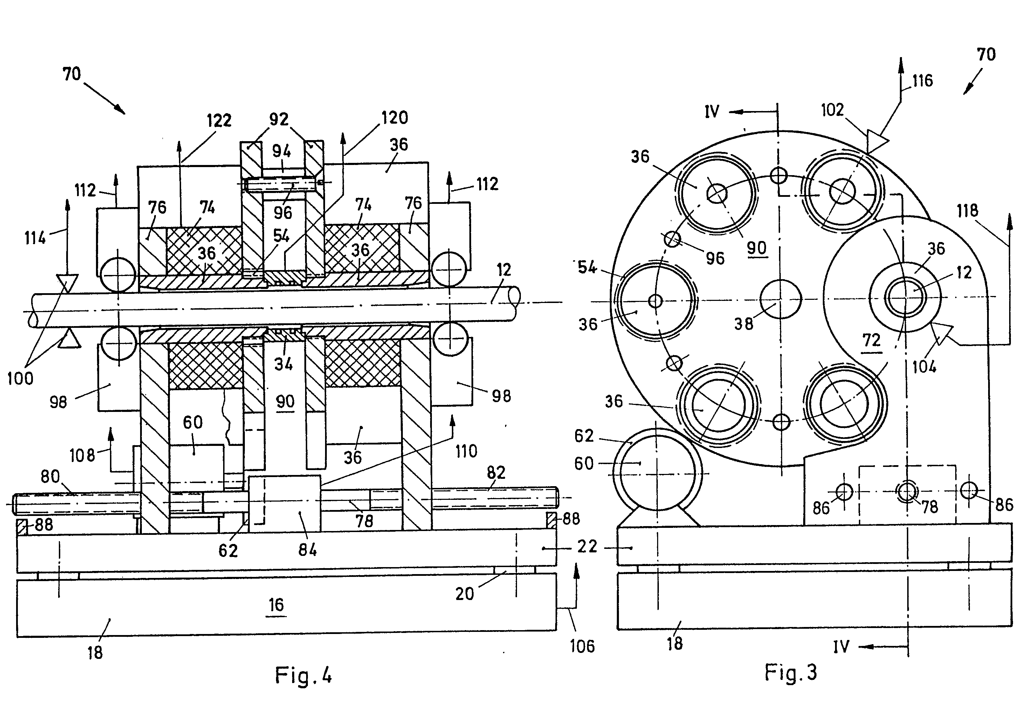

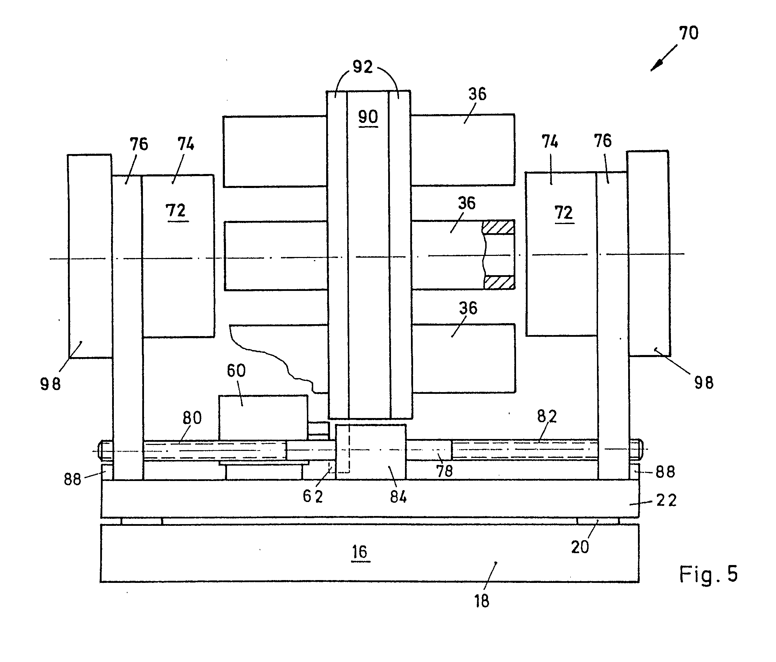

In den Figuren 3, 4 und 5 ist eine von der zuvor beschriebenen abweichende Wirbelstromgeberanordnung 70 abgebildet, die ebenfalls als Anwendungsbeispiel der Erfindung dienen kann. Im Gegensatz zur zuvor beschriebenen wird in Geberanordnung 70 eine Magnetisierungseinrichtung 72 benutzt, deren Spulen unmittelbar vom Prüfling 12 durchlaufen werden. Alle Bauteile der Geberanordnung 70 sind auf die Montageplatte 2 eines Hubtisches 16 aufgebaut, der dem in Anordnung 10 benutzten entsprechen kann. Die Magnetisierungseinrichtung 72 besteht in erster Linie aus zwei die Führungsdüsen 36 umfassenden Magnetisierungsspulen 74 und zwei Jochplatten 76 aus ferromagnetischem Werkstoff, an denen die Spulen 74 in geeigneter Weise befestigt sind. Der magnetische Fluß, der ähnlich wie in Anordnung 10 durch die Führungsdüsen 36 bis an die zu magnetisierende Stelle des Prüfling 12 in der Prüfspulenanordnung 34 herangeführt wird, schließt sich zwischen den beiden Jochplatten 76 über die Montageplatte 22 des Hubtisches 16, die aus ferromagnetischem Werkstoff bestehen muß. Die Magnetisierungseinrichtung 72 besitzt zusätzliche Mittel, die dazu bestimmt sind, ein Auseinanderfahren der beiden Jochplatten 76 samt den zugehörigen Spulen 74 vor dem Betätigen des Revolverkopfes zu ermöglichen, wie dies am besten in Figur 5 zu erkennen ist. Dazu gehören eine Spindel 78, ausgestattet mit zwei gegenläufigen Gewinden 80 und 82, die jeweils in entsprechende Gewinde der Jochplatten 76 eingreifen, ferner eine Antriebseinrichtung 84 zur Lagerung und Betätigung der Spindel 78 und zwei Führungssäulen 86, die in entsprechenden Bohrungen der Jochplatten 76 laufen und die letzteren auf diese Weise führen. Die Wege der Jochplatten 76 werden jeweils nach außen begrenzt durch Anschläge 88.

Der Revolverkopf 90 umfaßt wie der weiter oben beschriebene sechs verschiedene Spulen/Düsen-Kombinationen. Zur Aufnahme der letzteren verfügt er über zwei Scheiben 92 die durch Abstandshülsen 94 und Schrauben 96 im gewünschten Abstand zusammengehalten werden. Wie in Anordnung 10 läßt sich der Revolverkopf 90 um eine Welle 38 drehen, deren Lagerung der Einfachheit und Übersicht halber in den Figuren 3-5 weggelassen wurde. Die Prüfspulenanordnungen 34 sind zwischen den Scheiben 92 angebracht und werden durch Ringe 54 festgehalten. Die Führungsdüsen 36 sind mittels Gewinde entweder unmittelbar/oder über die Ringe 54 an den Scheiben 92 befestigt.

Zumindest bei einer der vorgesehenen sechs Spulen/Düsen-Kombinationen kann für die Prüfspulenanordnung 34 eine Steckkontaktierung vorgesehen sein. Dadurch wird es möglich, noch nachträglich beliebige Spulen/Düsen-Kombinationen einzubauen, z. B. solche für selten vorkommende Durchmesser oder von der Kreisform abweichende Profile des Prüfgutes. Der Einbau einer solchen besonderen Spulen/Düsen-Kombination kann erfolgen, während sich eine andere im Prüfeinsatz befindet, so daß der Vorteil der Kurzen Umrüstzeit auch hier voll zum Tragen kommt.

Zur Betätigung des Revolverkopfes 90 ist wiederum ein Stellmotor 60 vorgesehen, der über ein Zahnrad 62 und einen an der vorderen Scheibe 92 angebrachten Zahnkranz die Drehbewegung des Revolverkopfes 90 bewirkt. Eine zusätzliche verstellbare zentrierende Führungseinrichtung 98 ist zur genauen Führung des Prüfling 12 jeweils an den beiden Jochplatten 76 angebracht. Sie kann z. B. in einem Tripel von miteinander gekoppelten Rollen bestehen.

In den Figuren 4 und 5 ist eine solche Führungseinrichtung schematisiert wiedergegeben, in Figur 3 wurde der Übersichtlichkeit wegen auf die Wiedergabe verzichtet. Zur Erweiterung des Informationsangebotes ist die Geberanordnung 70 ferner, wie in Figur 4 angedeutet, mit einer Einrichtung 100 zum Ermitteln des Prüfgutdurchmessers ausgerüstet. Einem Fühler 102 obliegt die Aufgabe, die Stellung des Revolverkopfes 90 anzugeben, d. h. zu melden, welcher Sektor des Revolverkopfes sich gerade in Prüfstellung befindet. Darüber hinaus ist jede Prüfspulenanordnung und Führungsdüse oder auch nur jede Spulen/Düsen-Kombination mit einer codierten Kennung versehen, die außer der Dimensionsangabe auch eine Artangabe enthält, die z. B. mitteilt, ob es sich um eine Einfach- oder Mehrfachprüfspule handelt, für welchen Frequenzbereich sie geeignet ist und dgl. Diese Kennung wird abgefragt durch eine Fühleinrichtung 104, die der in Prüfstellung befindlichen Spulen/Düsen-Kombination benachbart ist.

Die oben beschriebene Geberanordnung besitzt alle Voraussetzungen für eine vollautomatische Steuerung und Überwachung der beim Wechsel auf andersgeartetes Prüfling erforderlichen Vorgänge durch einen Computer. Ein zentraler Controller des letzteren erteilt die notwendigen Befehle an den Hubtisch 16 über eine Leitung 106, an den Stellmotor 60 für den Revolverkopf 90 über eine Leitung 108, an die Anstriebseinrichtung 84 für die Spindel 78 über eine Leitung 110 und an die Führungseinrichtung 98 über Leitungen 112. Die für diese Aufgabe nötigen Informationen bezieht der zentrale Controller aus der Einrichtung 100 zur Ermittlung des Prüfgutdurchmessers über eine Leitung 114, aus dem Fühler 102 zur Angabe der Revolverkopfstellung über eine Leitung 116, aus der Fühleinrichtung 104 für die Kennung der Spulen/Düsen-Kombination über eine Leitung 118 sowie aus einem für die Aufgabe programmierten Speicher. Die Leitungen 120, 122 verbinden in bekannter Weise die Prüfspulenanordnung 34 sowie die Magnetisierungsspulen 74 mit dem Wirbelstromprüfgerät.

**Patentansprüche**

1. Wirbelstromgeberanordnung zum Prüfen von langgestreckten elektrisch leitenden Prüflingen (12), mit einer Prüfspulenanordnung (34), die vom Prüfling (12) durchlaufen wird, mit einem Satz von zwei Führungsdüsen (36), die ebenfalls vom Prüfling (12) durchlaufen werden und von denen eine vor und eine hinter der Prüfspulenanordnung (34) angebracht ist, sowie mit Mitteln (32, 90) zur Halterung der Prüfspulenanordnung (34) und der Führungsdüsen (36) der vom Prüfling (12) durchlaufenen Bahn, dadurch gekennzeichnet, daß zu den genannten Mitteln (32, 90) ein um eine Achse (50) drehbarer Revolverkopf (32, 90) gehört, der neben der genannten Prüfspulenanordnung (34) und ihrem zugehörigen Satz von Führungsdüsen (36) mindestens eine weitere Prüfspulenanordnung (34) sowie einen zugehörigen Satz von Führungsdüsen (36) trägt und daß die Prüfspulenanordnungen (34) zusammen mit den zugehörigen Sätzen von Führungsdüsen (36) so in den Revolverkopf (32, 90) eingebaut sind, daß jeweils eine der Prüfspulenanordnungen (34) zusammen mit ihrem zugehörigen Satz von Führungsdüsen (36) durch Drehen des Revolverkopfes (32, 90) in die Bahn des Prüflings (12) gebracht werden kann.

2. Wirbelstromgeberanordnung nach Anspruch 1, dadurch gekennzeichnet, daß zusätzlich eine Einrichtung (14, 72) zum Magnetisieren des Prüflings (12) vorgesehen ist, die so angeordnet ist, daß jede Prüfspulenanordnung (34) samt zugehörigen Führungsdüsen (36) durch Verdrehen des Revolverkopfes (32, 90) in den magnetischen Kreis der Einrichtung (14, 72) zum Magnetisieren des Prüflings (12) eingeschoben wird.

3. Wirbelstromgeberanordnung nach Anspruch 2, dadurch gekennzeichnet, daß die Kombination von Prüfspulenanordnung (34) und Führungsdüsen (36) zwischen zwei Pole (29) aus magnetisch leitendem Material eingeschoben wird, die Bestandteil der Einrichtung (14, 72) zum Magnetisieren sind.

4. Wirbelstromgeberanordnung nach Anspruch 3, dadurch gekennzeichnet, daß zum Einleiten des magnetischen Flusses in die Führungsdüsen (36) am Revolverkopf (32, 90) magnetisch leitende Anpassungsstücke (56) vorgesehen sind, daß die Pole (29) eine konkav kreisförmige Krümmung aufweisen und daß die Rückseiten (58) der Anpassungsstücke (56) an die Krümmung der Pole (29) angepaßt sind.

5. Wirbelstromgeberanordnung nach Anspruch 2, dadurch gekennzeichnet, daß die Einrichtung (14, 72) zum Magnetisieren des Prüflings (12) zwei im Abstand zueinander angeordnete Spulen (74) aufweist, die jeweils die Bahn des Prüflings (12) umfassen und daß die Kombination von Prüfspulenanordnung (34) und Führungsdüsen (36) durch den Revolverkopf (32, 90) zwischen die beiden Spulen (74) eingeschoben wird.

6. Wirbelstromgeberanordnung nach Anspruch 5, dadurch gekennzeichnet, daß die Führungsdüsen (36) in das Innere der Spulen (74) hineinragen und daß weitere, Mittel (76, 78, 84) vorgesehen sind, durch die die Spulen (74) in Prüflinglängsrichtung auseinander gefahren werden können.

7. Wirbelstromgeberanordnung nach Anspruch 6, dadurch gekennzeichnet, daß die weiteren Mittel bestehen aus

a) zwei die Spulen (74) tragenden Gliedern (76), die jeweils eine Gewindebohrung mit unterschiedlich gerichtetem Gewinde aufweisen,

b) einer Spindel (78) mit unterschiedlich gerichteten Gewindeteilen (80, 82), die mit den Gewindebohrungen der genannten Glieder (76) korrespondieren,

c) einem Antrieb (84) für die Spindel (78),

d) einer Führung (86) für die Glieder (76).

8. Wirbelstromgeberanordnung nach Anspruch 7, dadurch gekennzeichnet, daß die Glieder (76) gleichzeitig zur Weiterleitung des magnetischen Flusses dienen.

9. Wirbelstromgeberanordnung nach einem der vorhergehenden Ansprüche, dadurch gekennzeichnet, daß ein motorischer Antrieb (60) zum Verdrehen des Revolverkopfes (32, 90) vorgesehen ist.

10. Wirbelstromgeberanordnung nach einem der vorhergehenden Ansprüche, dadurch gekennzeichnet, daß der Revolverkopf (32, 90) gleichartige Bohrungen zur Aufnahme der Kombination aus Prüfspulenanordnung (34) und Führungsdüsen (36) aufweist.

11. Wirbelstromgeberanordnung nach einem der vorhergehenden Ansprüche, dadurch gekennzeichnet, daß wenigstens eine Sektion des Revolverkopfes (32, 90) für einen jederzeitigen Austausch der in ihr enthaltenen Kombination von Prüfspulenanordnung (34) und Führungsdüsen (36) gegen eine andere eingerichtet ist.

12. Wirbelstromgeberanordnung nach Anspruch 11, dadurch gekennzeichnet, daß der Austausch der Prüfspulenanordnung (34) ebenso wie der Austausch der Führungsdüsen (36) in der Prüflinglängsrichtung erfolgt.

13. Wirbelstromgeberanordnung nach einem der vorhergehenden Ansprüche, dadurch gekennzeichnet, daß die Prüfspulenanordnung (34) und die Führungsdüsen (36) oder auch nur ihre Kombination mit einer codierten Kennung ausgestattet sind und daß an der Bahn des Prüflings (12) eine Einrichtung (104) zum Abfühlen dieser Kennung angebracht ist.

14. Wirbelstromgeberanordnung nach einem der vorhergehenden Ansprüche, dadurch gekennzeichnet, daß ein dem Revolverkopf (32, 90) gegenüberstehender Fühler (102) zum Abfühlen der Stellung des Revolverkopfes (32, 90) vorgesehen ist.

15. Wirbelstromgeberanordnung nach einem der vorhergehenden Ansprüche, dadurch gekennzeichnet, daß die Steuerung und/oder Überwachung der Vorgänge, die zur Umstellung der Dimension oder Art des Prüflings (12) gehören, durch einen Computer erfolgt.

**Claims**

1. An eddy current generator arrangement for testing elongate electrically conductive testpieces (12), comprising a test coil arrangement (34) through which the testpiece (12) passes, a set of two guide nozzles (36) through which the testpiece (12) also passes, one of the guide nozzles being disposed upstream and the other being disposed downstream of the test coil arrangement (34), and means (32, 90) for holding the test coil arrangement (34) and the guide nozzles (36) in the path of movement of the testpiece (12), characterised in that said means (32, 90) include a rotary head (32, 90) which is rotatable about an axis (50) and which, besides said test coil arrangement (34) and its associated set of guide nozzles (36), carries at least one further test coil arrangement (34) and an associated set of guide nozzles (36), and that the test coil arrangements (34) together with the associated sets of guide nozzles (36) are so incorporated into the rotary head (32, 90) that a respective one of the test coil arrangements (34) together with its associated set of guide nozzles (36) can be moved into the path of the testpiece (12) by rotation of the rotary head (32, 90).

2. An eddy current generator arrangement according to claim 1 characterized in that in addition there is provided a means (14, 72) for magnetising the testpiece (12), said means (14, 72) being so arranged that each test coil arrangement (34) with associated guide nozzles (36), by rotary movement of the rotary head (32, 90), can be inserted into the magnetic circuit of the means (14, 72) for magnetising the testpiece (12).

3. An eddy current generator arrangement according to claim 2 characterised in that the combination of test coil arrangement (34) and guide nozzles (36) is inserted between two poles (29) of magnetically conductive material which are part of the magnetising means (14, 72).

4. An eddy current generator arrangement according to claim 3 characterised in that magnetically conductive matching members (56) are provided on the rotary head (32, 90) for conducting the magnetic flux into the guide nozzles (36), that the poles are of a concavely circularly curved configuration and that the rear sides (58) of the matching members (56) are matched to the curvature of the poles (29).

5. An eddy current generator arrangement according to claim 2 characterised in that the means (14, 72) for magnetising the testpiece (12) has two spaced-apart coils (74) which each extend around the path of movement of the testpiece (12) and that the combination of test coil arrangement (34) and guide nozzles (36) is inserted between the two coils (74) by the rotary head (32, 90).

6. An eddy current generator arrangement according to claim 5 characterised in that the guide nozzles (36) project into the interior of the coils (74) and that there are provided further means (76, 78, 84) by which the coils (74) can be moved apart in the longitudinal direction of the testpiece.

7. An eddy current generator arrangement according to claim 6 characterised in that the further means comprise :

a) two members (76) which carry the coils (74) can which each have a screwthreaded bore with screwthreads of different directions,

b) a spindle (78) with screwthreaded portions (80) of different directions, which correspond to the screwthreaded bores in said members (76),

c) a drive (84) for the spindle (78), and

d) a guide (86) for the members (76).

8. An eddy current generator arrangement according to claim 7 characterised in that the members (76) serve at the same time for transmitting the magnetic flux.

9. An eddy current generator arrangement according to one of the preceding claims characterised in that a motor drive (6) is provided for rotating the rotary head (32, 90).

10. An eddy current generator arrangement according to one of the preceding claims characterised in that the rotary head (32, 90) has similar bores for accommodating the combination of test coil arrangement (34) and guide nozzles (36).

11. An eddy current generator arrangement according to one of the preceding claims characterised in that at least a section of the rotary head (32, 90) is arranged for replacement at any time of the combination of test coil arrangement (34) and guide nozzles (36) contained therein, by another combination.

12. An eddy current arrangement according to claim 11 characterised in that replacement of the test coil arrangement (34), like replacement of the guide nozzles (36), is effected in the longitudinal direction of the test piece.

13. An eddy current generator arrangement according to one of the preceding claims characterised in that the test coil arrangement (34) and the guide nozzles (36) or also only the combination thereof are provided with a coded identification and that a means (104) for sensing said identification is disposed on the path of movement of the testpiece (12).

14. An eddy current generator arrangement according to one of the preceding claims characterised in that a sensor (102 which is disposed in opposite relationship to the rotary head (32, 90) is provided for sensing the position of the rotary head (32, 90).

15. An eddy current generator arrangement according to one of the preceding claims characterised in that control and/or monitoring of the operations which are included in changing over the dimension or nature of the testpiece (12) is effected by a computer.

**Revendications**

1. Dispositif transmetteur de courants de Foucault destiné à l'examen de pièces d'essai (12) de grande longueur conductrices de l'électricité et comprenant un dispositif à bobines exploratrices (34), dans lequel passe la pièce d'essai (12), et un jeu de deux filières de guidage (36), dans lesquelles la pièce d'essai (12) passe également, ces filières étant situées l'une en avant, l'autre en arrière du dispositif (34) à bobines exploratrices, et des moyens (32, 90) assurant le maintien du dispositif (34) à bobines exploratrices et des filières de guidage (36) sur le trajet suivi par la pièce d'essai (12), caractérisé en ce que lesdits moyens (32, 90) comprennent une tourelle révolver (32, 90) qui peut tourner autour d'un axe (50) et qui, à côté du dispositif (34) à bobines exploratrices et du jeu correspondant de filières de guidage (36), porte au moins un autre dispositif (34) à bobines exploratrices et un jeu correspondant de filières de guidage (36) et que les dispositifs (34) à bobines exploratrices et les jeux de filières de guidage (36) correspondants sont montés dans la tourelle révolver (32, 90) de telle manière que chacun des dispositifs (34) à bobines exploratrices et le jeu correspondant des filières de guidage (36) puissent être amenés, par rotation de la tourelle révolver (32, 90), sur le trajet de la pièce d'essai (12).

2. Dispositif transmetteur de courants de Foucault selon la revendication 1, caractérisé en ce qu'il comprend, en plus, un dispositif (14, 72) pour l'aimantation de la pièce d'essai (12) qui est monté de telle manière que chaque dispositif (34) à bobines exploratrices et les filières de guidage (36) correspondantes peuvent être placées, par rotation de la tourelle révolver (32, 90), dans le circuit magnétique du dispositif (14, 72) pour l'aimantation de la pièce d'essai (12).

3. Dispositif transmetteur de courants de Foucault selon la revendication 2, caractérisé en ce que la combinaison de dispositif (34) à bobines exploratrices et de filières de guidage (36) est introduite entre deux pôles (29) qui sont constitués par un matériau conduisant le flux magnétique et font partie du dispositif (14, 72) assurant l'aimantation.

4. Dispositif transmetteur de courants de Foucault selon la revendication 3, caractérisé en ce que, pour amener le flux magnétique dans les filières de guidage (36), la tourelle révolver (32, 90) comprend des pièces d'adaptation (56) qui conduisent le flux magnétique, que les pôles (29) présentent une concavité de forme circulaire et que les côtés arrière (58) des pièces d'adaptation (56) ont une courbure correspondant à celle des pôles (29).

5. Dispositif transmetteur de courants de Foucault selon la revendication 2, caractérisé en ce que le dispositif (14, 72) destiné à l'aimantation de la pièce d'essai (12) comporte deux bobines (74), montées à une certaine distance l'une de l'autre, qui entourent chacune le trajet suivi par la pièce d'essai (12) et en ce que la combinaison de dispositif (34) à bobines exploratrices et de filières de guidage (36) est introduite par la tourelle révolver (32, 90) entre les deux bobines (74).

6. Dispositif transmetteur de courants de Foucault selon la revendication 5, caractérisé en ce que les filières de guidage (36) dépassent à l'intérieur des bobines (74) et en ce que le dispositif comporte d'autres moyens (76, 78, 84) permettant d'écarter l'une de l'autre les bobines (74) dans le sens de la longueur de la pièce d'essai.

7. Dispositif transmetteur de courants de Foucault selon la revendication 6, caractérisé en ce que ces autres moyens sont constitués par :

a) deux pièces (76) qui portent les bobines (74) et comportent chacune un alésage fileté à filetages d'orientations différentes ;

b) une broche (78) comportant des alésages filetés à filetages d'orientations différentes (80, 82) qui correspondent à ceux desdites pièces (76) ;

c) un dispositif d'entraînement (84) pour la broche (78) ;

d) un dispositif de guidage (86) des pièces (76).

8. Dispositif transmetteur de courants de Foucault selon la revendication 7, caractérisé en ce que les pièces (76) servent en même temps à conduire le flux magnétique.

9. Dispositif transmetteur de courants de Foucault selon l'une des revendications précédentes, caractérisé en ce qu'il comprend un dispositif d'entraînement (60) à moteur assurant la rotation de la tourelle révolver (32, 90).

10. Dispositif transmetteur de courants de Foucault selon l'une des revendications précédentes, caractérisé en ce que la tourelle révolver (32, 90) comporte des alésages identiques pouvant recevoir la combination de dispositif (34) à bobines exploratrices et de filières de guidage (36).

11. Dispositif transmetteur de courants de Foucault selon l'une des revendications précédentes, caractérisé en ce qu'un secteur au moins de la tourelle révolver (32, 90) est conçu de manière à permettre à chaque instant le remplacement de la combinaison qu'il contient de dispositif (34) à bobines exploratrices et de filières de guidage (36) par une autre combinaison.

12. Dispositif transmetteur de courants de Foucault selon la revendication 11, caractérisé en ce que le remplacement du dispositif (34) à bobines exploratrices, comme le remplacement des filières de guidage (36), s'effectue dans le sens de la longueur de la pièce d'essai.

13. Dispositif transmetteur de courants de Foucault selon l'une des revendications précédentes, caractérisé en ce que le dispositif (34) à bobines exploratrices et les filières de guidage (36) ou encore leur combinaison sont munis d'une étiquette codée et en ce que le dispositif comprend, sur le trajet de la pièce d'essai (12), un dispositif (104) qui peut détecter cette étiquette.

14. Dispositif transmetteur de courants de Foucault selon l'une des revendications précédentes, caractérisé en ce qu'il comprend, en face de la tourelle révolver (32, 90), un organe d'exploration (102) capable de distinguer la position de la tourelle revolver (32, 90).

15. Dispositif transmetteur de courants de Foucault selon l'une des revendications précédentes, caractérisé en ce que la commande et/ou le contrôle des opérations liées à la modification des dimensions ou de la nature de la pièce d'essai (12) sont assurés par un ordinateur.

10
42
44
58
26
56
28
14
12
38
32
36
II
II
46
48
46
29
62
30
60
22
24
20
16
18
50
38
12
42
10
22
40
20
44
56
32
36a
14
45
36
28
34a
52
34
54
26
45
36a
36
44
56
40
42

Fig. 1

Fig. 2

Fig. 4

Fig. 3

70
98
88
22
76
72
74
82
20
36
36
36
78
84
92
90
16
18
62
60
80
74
72
76
88
98

Fig. 5